# EUROPEAN PATENT APPLICATION

(11) **EP 3 986 022 A1**
(43) Date of publication of application: **20.04.2022**
(21) Application number: 19933037.4
(22) Date of filing: 13.06.2019
(51) Int. Cl.: H04W 28/16, H04W 16/26, H04W 92/20

(54) **RADIO COMMUNICATION NODE AND RADIO COMMUNICATION METHOD**

(71) Applicant: NTT DOCOMO, INC., Chiyoda-Ku Tokyo 100-6150 (JP)
(72) Inventor: KURITA Daisuke, Tokyo 100-6150 (JP); HARADA Hiroki, Tokyo 100-6150 (JP)
(74) Representative: Hoffmann Eitle
(86) International application number: PCT/JP2019/023563
(87) International publication number: WO 2020/250395

(57) **Abstract**

A radio communication node 100A acquires configuration information on a radio resource for a child node in IAB node. The configuration information includes configuration information 1 that includes information on a radio resource transmitted by a network to IAB node, and configuration information 2 that includes information on a radio resource that is handled as a radio resource that is always available as a radio resource for child node.

## Description

### TECHNICAL FIELD

The present invention relates to a radio communication node that is capable of configuring a radio access and a radio backhaul.

### BACKGROUND ART

The 3rd Generation Partnership Project (3GPP) specifies Long Term Evolution (LTE), and with the aim of further speeding, specifies LTE-Advanced (hereinbelow, the LTE includes the LTE-Advanced). In the 3GPP, specifications for 5th generation mobile communication system (5G, also called as New Radio (NR) or Next Generation (NG)) are also being considered.

For example, in a radio access network (RAN) of the NR, an Integrated Access and a Backhaul (IAB) in which a radio access to a user equipment (UE) and a radio backhaul set between radio communication nodes such as radio base stations (gNBs) are integrated is being studied.

In the IAB, IAB node includes Mobile Termination (MT) function for connecting to a parent node, and a Distributed Unit (DU) function for connecting to a child node or the UE.

Moreover, in the IAB, even if there is a restriction of half duplex communication, radio resources shared based on time division multiplexing (TDM), frequency division multiplexing (FDM), and space division multiplexing (SDM) are available via the radio access and the radio backhaul. Among such resources, from the DU's perspective, downlink (DL), uplink (UL), and Flexible time-resource (D/U/F) are either hard resources, soft resources, or Non Available (H/S/NA).

Specifically, the "hard" radio resource is a radio resource that is always available for a DU child link via which a corresponding time resource is connected to a child node or the UE, and the "soft" radio resource is a radio resource (DU resource) in which the availability thereof for the DU child link of the corresponding time resource is explicitly or implicitly controlled by the parent node.

In the 3GPP, a radio resource control method for MTs and DUs that use such half-duplex communication is being discussed (see Non-Patent Document 1).

As a result of the discussion, it has been agreed upon that a parent node need not directly recognize a cell specific signal or channel (for example, PRACH (Physical Random Access Channel) and SS / PBCH Block (SSB)) allocation information for the DU of the IAB node (see Non-Patent Document 2). Moreover, it has also been agreed upon that when the cell specific signal or channel is configured for the DU of the IAB node, the IAB node handles the radio resource used for configuring the cell specific signal or channel as the hard resource (Hard DU resource).

### PRIOR ART DOCUMENT

### NON-PATENT DOCUMENT

Non-Patent Document 1: "Summary of 7.2.3.3 Mechanisms for resource multiplexing among backhaul and access links", R1-1905739, 3GPP TSG RAN WG1 Meeting #96bis, 3GPP, April 2019
Non-Patent Document 2: "RAN1 Chairman's Notes", 3GPP TSG RAN WG1 Meeting #97, 3GPP, May 2019

### SUMMARY OF THE INVENTION

As explained above, a parent node need not directly recognize a cell specific signal or channel allocation information for DU of IAB node. However, the IAB node handles a radio resource used for configuring the cell specific signal or channel for the DU of own node as a hard DU resource.

Considering such a scenario, from a viewpoint of an appropriate allocation of radio resources that can be shared between radio communication nodes, it is desirable that the parent node should be able to recognize information of radio resources that are handled as Hard DU resources in the IAB node

Therefore, the present invention has been made in view of the above circumstances. One object of the present invention is to provide a radio communication node and a radio communication method capable of realizing a more appropriate allocation of radio resources in an Integrated Access and Backhaul (IAB) configuration.

According to one aspect of the present invention a radio communication node in which a first radio link (Link_parent) is configured between the radio communication node (radio communication nodes 100A) and a first radio node (IAB node), and a second radio link (Link Child) is configured between the first radio node and a second radio node (child node) includes a controlling unit that acquires configuration information of a radio resource for the second radio node in the first radio node. The configuration information includes first configuration information that includes information on a radio resource transmitted by a network to the first radio node, and second configuration information that includes information on a radio resource that is handled as a radio resource that is always available as a radio resource for the second radio node.

According to another aspect of the present invention a radio communication method includes configuring a first radio link between a radio communication node and a first radio node and a second radio link is configured between the first radio node and a second radio node, and acquiring configuration information on a radio resource for the second radio node in the first radio node. The configuration information includes first configuration information that includes information on a radio resource that is transmitted by a network to the first radio node, and second configuration information that includes information on a radio resource that is handled as a radio resource that is always available as a radio resource for the second radio node.

### BRIEF DESCRIPTION OF DRAWINGS

FIG. 1 is an overall structural diagram of a radio communication system 10.
FIG. 2 shows a basic configuration example of IAB.
FIG. 3 is a functional block diagram of a radio communication node 100A.
FIG. 4 is a functional block diagram of CU 50
FIG. 5 is a diagram showing an example of allocation of MT and DU resources to a parent node and IAB node.
FIG. 6 is a diagram showing an operation sequence for allocating the DU resource to the IAB node.
FIG. 7 is a diagram showing an example of signaling of configuration information 1 (Semi-static DU resource).
FIG. 8 is a diagram showing an example of signaling of configuration information 2 (Treated as DU H resource).
FIG. 9 is a diagram showing an example of hardware configuration of the CU 50 and radio communication nodes 100A, 100B, and 100C.

### MODES FOR CARRYING OUT THE INVENTION

Exemplary embodiments of the present invention are explained below with reference to the accompanying drawings. Note that, the same or similar reference numerals have been attached to the same functions and configurations, and the description thereof is appropriately omitted.

### (1) Overall Structural Configuration of Radio Communication System

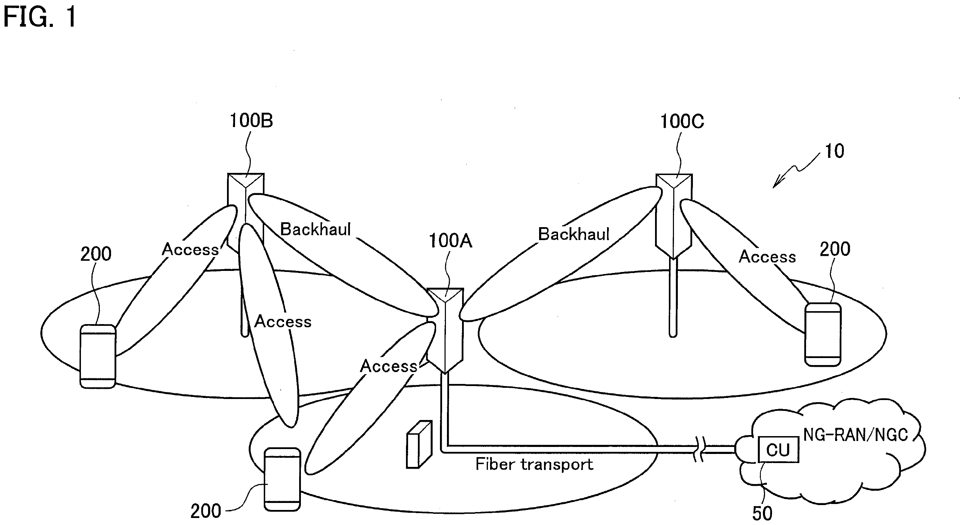

FIG. 1 is an overall structural diagram of a radio communication system 10 according to the present embodiment. The radio communication system 10 is a radio communication system using 5G New Radio (NR), and is constituted by a plurality of radio communication nodes and a user equipment.

Specifically, the radio communication system 10 includes radio communication nodes 100A, 100B, and 100C, and a user equipment 200 (hereinafter, "UE 200").

The radio communication nodes 100A, 100B, and 100C are capable of configuring a radio access with the UE 200 and a radio backhaul between the radio communication nodes. Specifically, a backhaul using a radio link (transmission path) is configured between the radio communication node 100A and the radio communication node 100B, and between the radio communication node 100A and the radio communication node 100C.

Accordingly, a configuration in which the radio access to the UE 200 and the radio backhaul between the radio communication nodes are integrated is called Integrated Access and Backhaul (IAB).

In the IAB, the existing functions and interfaces defined for the radio access are reused. Particularly, the Mobile-Termination (MT), gNB-DU (Distributed Unit), gNB-CU (Central Unit), User Plane Function (UPF), Access and Mobility Management Function (AMF), and a Session Management Function (SMF), along with their corresponding interfaces, for example, NR Uu (between MT and gNB / DU), F1, NG, X2, and N4 are used as a baseline.

The radio communication node 100A is connected to a core network (Next Generation Core (NGC) or 5GC) and a radio access network (NG-RAN) of the NR via a wired transmission path such as fiber transport. The NG-RAN / NGC includes a Central Unit 50 (hereinafter, CU 50) that is a communication node. Furthermore, the NG-RAN and the NGC together can simply be expressed as "network".

The CU 50 can be configured by any one of the UPF, the AMF, and the SMF explained above or combination thereof. Alternatively, the CU 50 can be a gNB-CU as that explained above.

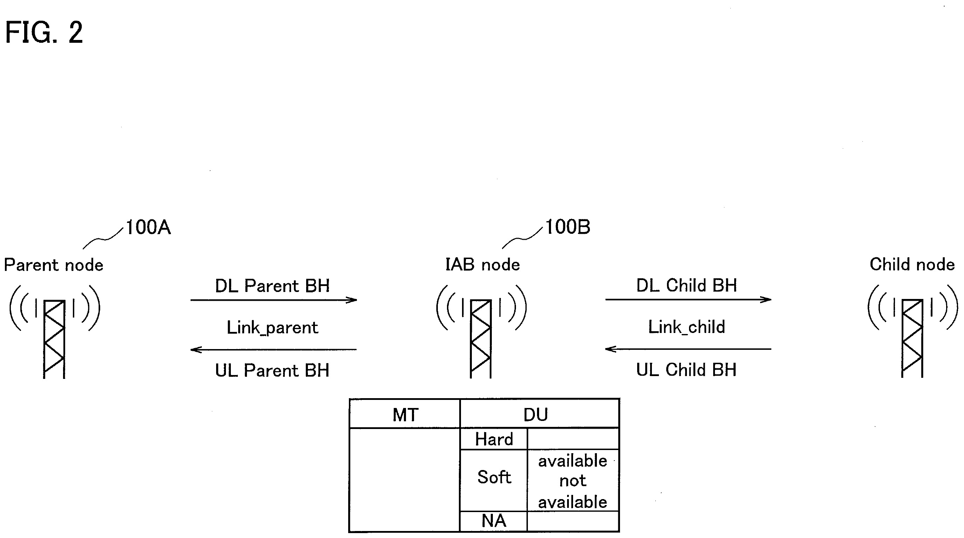

FIG. 2 shows a basic configuration example of the IAB. As shown in FIG. 2, in the present embodiment, the radio communication node 100A constitutes a parent node in the IAB, and the radio communication node 100B (and radio communication node 100C) constitutes the IAB node (first radio node) in the IAB. Furthermore, the parent node can be referred to as IAB donor.

The child node (second radio node) in the IAB is constituted by other radio communication nodes that are not shown in FIG. 1. Alternatively, the child node can be constituted by the UE 200.

A radio link (first radio link) is configured between the parent node and the IAB node. Specifically, a radio link called Link_parent is configured.

A radio link (second radio link) is configured between the IAB node and the child node. Specifically, a radio link called Link_child is configured.

Such radio links configured between the radio communication nodes are called radio backhauls (BH). The Link_parent is constituted by a downlink DL Parent BH and an uplink UL Parent BH. The Link_child is constituted by a downlink DL Child BH and an uplink UL Child BH.

Furthermore, the radio link configured between the UE 200, and the IAB node or the parent node is called an access link (AC).

The IAB node includes a Mobile Termination (MT) function for connecting to the parent node and a distributed unit (DU) function for connecting to the child node (or the UE 200). Although not shown in FIG. 2, the parent node and the child node, too, include the MT and the DU.

Radio resources used by the DU are categorized into any of hard, soft, or Not Available (H / S / NA) types. Moreover, the soft (S) resources are further defined as "available" or "not available".

The configuration example of the IAB shown in FIG. 2 uses CU / DU division; however, the IAB configuration need not necessarily be limited to such a configuration. For example, in the radio backhaul, the IAB can be constituted by a tunneling that uses GPRS Tunneling Protocol (GTP)-U / User Datagram Protocol (UDP) / Internet Protocol (IP).

The main advantage of such IAB configuration is that NR cells can be flexibly and densely arranged without increasing the density of the transport network. The IAB can be applied to various scenarios, such as arrangement of small cell outdoors, and support for indoor and mobile relays (for example, in buses and trains).

Even if the radio resource used for the radio access and the radio backhaul are limited to half-duplex communication, the time division multiplexing (TDM), the frequency division multiplexing (FDM), and the space division multiplexing (SDM) can be used. However, the radio resource need not necessarily be limited to half-duplex communication and can use full-duplex communication as long as other requirements are satisfied.

Moreover, as shown in FIGS. 1 and 2, the IAB can support deployment in a standalone (SA) mode of NR only or a non-standalone (NSA) mode that includes other RATs (LTE and the like).

### (2) Functional Block Configuration of Radio Communication System

A functional block configuration of the radio communication nodes 100A and CU 50 included in NGC that constitute the radio communication system 10 will be explained below.

### (2.1) Radio communication node 100A

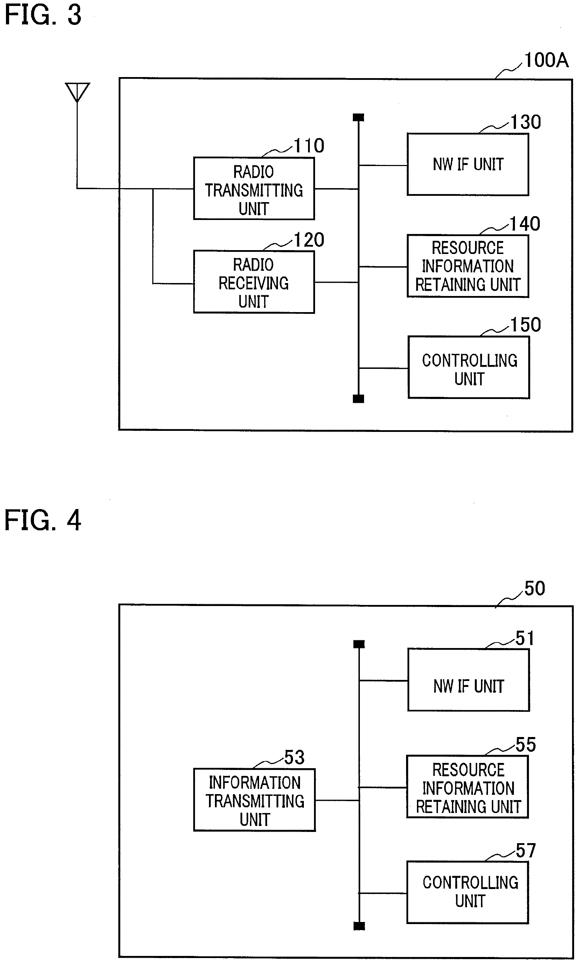

FIG. 3 is a functional block diagram of the radio communication node 100A that constitutes the parent node. As shown in FIG. 3, the radio communication node 100A includes a radio transmitting unit 110, a radio receiving unit 120, NW IF unit 130, a resource information retaining unit 140, and a controlling unit 150.

The radio transmitting unit 110 transmits a radio signal in accordance with the 5G specifications. Moreover, the radio receiving unit 120 transmits the radio signal in accordance with the 5G specifications. In the present embodiment, the radio transmitting unit 110 and the radio receiving unit 120 perform radio communication with the radio communication node 100B that constitutes the IAB node.

In the present embodiment, the radio communication node 100A includes functions of the MT and the DU, and the radio transmitting unit 110 and the radio receiving unit 120, too, transmit and receive radio signals for the MT and the DU.

The NW IF unit 130 provides a communication interface that realizes connection with the NGC side and the like. For example, the NW IF unit 130 can include interfaces such as X2, Xn, N2, and N3.

The resource information retaining unit 140 retains information on radio resources that are allocated to the parent node and the IAB node. Specifically, it is desirable that the resource information retaining unit 140 retains the following configuration information about at least the radio resources for DU (DU resources) of IAB node.

- DU resources (specifically, H / S / NA type)
- Information on allocation of the cell specific signal or channel in the IAB nodes explained below:
   (i) SS / PBCH Block (SSB) transmissions
   (ii) Broadcast system information
   (iii) Configured periodic CSI-RS (Channel State Information Reference Signal)
   (iv) PRACH (Physical Random Access Channel) resources
   (v) Resources for scheduling requests

Because the IAB node configuration information that includes the allocation information mentioned in points (i) to (v) is selected in the IAB node, the parent node acquires the configuration information configured in the IAB node. Furthermore, it is desirable that the resource information retaining unit 140 acquires all allocation information mentioned in points (i) to (v); however, part of the allocation information need not be acquired, and can be replaced by other information if it is possible to replace such information with other information.

The SS / PBCH Block (SSB) is a synchronizing signal / broadcast channel block that is constituted by SS and PBCH, and is mainly transmitted periodically to detect a cell ID and reception timing when a terminal starts communication. The SSB is also used to measure the reception quality of each cell in the 5G (NR).

The broadcast system information can be any SIB (System Information Block) or a specific SIB. Alternatively, the information may be notification information other than SIB.

The CSI information indicates the state of a radio channel via which a signal passes, and the CSI-RS is a reference signal used for acquiring the information.

The PRACH is a physical channel that the UE 200 initially transmits in the random access procedure. A scheduling request (SR) is a signal via which a user requests a radio base station (including the IAB node) for uplink radio resource allocation.

The controlling unit 150 controls various functional blocks that constitute the radio communication node 100A. Specifically, in the present embodiment, the controlling unit 150 acquires configurations of the radio resource for the child node (second radio node) in the IAB node (first radio node).

Specifically, the controlling unit 150 can acquire from the IAB node the configuration information that indicates the configurations of the radio resources (as explained above) . Alternatively, the controlling unit 150 can acquire from the network, specifically, from the CU 50 the configuration information that indicates the configurations of the radio resources.

Accordingly, the radio communication node 100A (parent node) can acquire the configuration information that indicates the configurations of the DU resource of the IAB node and retain the information in the resource information retaining unit 140.

It is desirable that the configuration information acquired by the controlling unit 150 as explained above includes at least the following information. Specifically, the configuration information can include a DU resource (H / S / NA) that is instructed semi-statically to the IAB node by the CU 50. In the present embodiment, such configuration information is referred to as configuration information 1 (can be referred to as first configuration information) for convenience. In other words, the configuration information 1 is the radio resource information transmitted by the network to the IAB node (first radio node).

Moreover, the configuration information can include a radio resource that is allocated to a cell specific signal or channel in the IAB node and handled as "hard" DU (referred to as Hard DU resource) in the IAB node. In the present embodiment, such configuration information is called configuration information 2 (can be referred to as second configuration information) . In other words, the configuration information 2 is the information on the radio resource that is handled as a radio resource that is always available as a radio resource for the child node (second radio node).

Furthermore, the cell in the IAB node simply means a cell formed by the IAB node (radio communication node 100B) . However, it can also mean a single component carrier or a plurality of the component carriers (CC), Bandwidth part (BWP) or beams that are used in the cell.

The controlling unit 150 can acquire the configuration information 1 and the configuration information 2 via a signaling (explained later) from the CU 50 or the IAB node (radio communication node 100B).

However, the controlling unit 150 can explicitly or implicitly acquire the configuration information 1 and the configuration information 2 by using a method that is different from the signaling transmitted from such CU 50 or the IAB node. In other words, the controlling unit 150 can recognize the configuration information 1 and the configuration information 2 by using the signaling or other explicit or implicit method.

Because different notification cycles and timings can be used for the configuration information 1 and the configuration information 2, different notification methods can be used for the configuration information 1 and the configuration information 2. In other words, the configuration information 1 and the configuration information 2 can be notified to the parent node by using different signaling configurations.

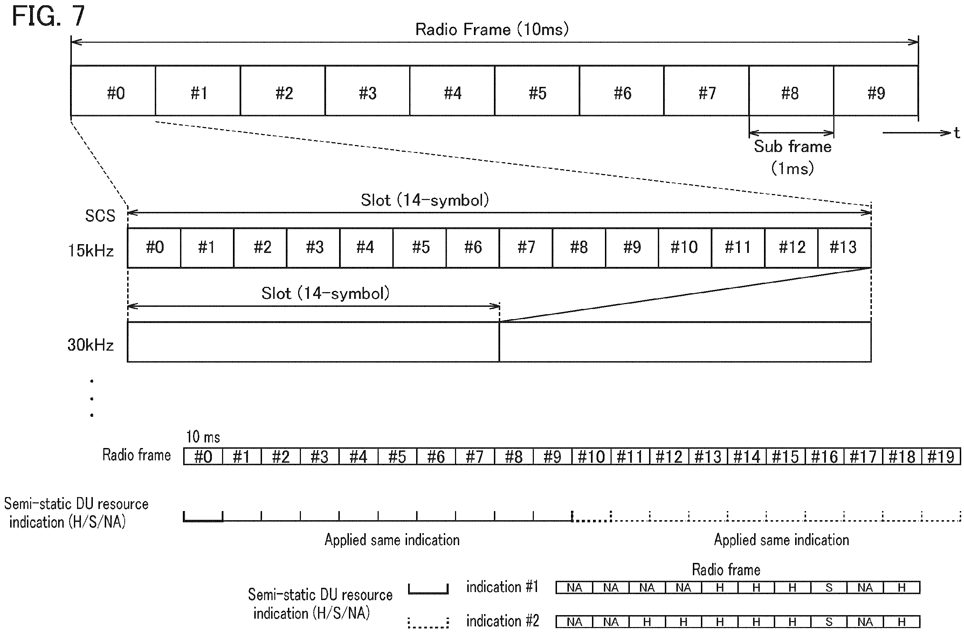

For example, the configuration information 1 can be notified in units of radio frame, subframe, or slot (see FIG. 7) in a radio resource pattern, specifically, in an H / S / NA pattern. In other words, the configuration information 1 can include information that indicates the type (H / S / NA) of radio resources (DU resources) for child nodes in the IAB node in units of radio frames, subframes, or slots.

The configuration information 2 can be notified as the information that includes the Hard DU resource pattern on the radio frame, subframe, or slot, the transmission cycle of the Hard DU resource, and an offset of the time direction from a location that indicates the Hard DU resource. In other words, the configuration information 2 can include the information that indicates the location of the Hard DU resource on the radio frame, the subframe or the slot.

Furthermore, as explained above, the Hard DU resource is a radio resource that is handled as the radio resource (hard) that is always available because the resource is allocated to a cell specific signal or channel (such as SSB, RACH) in the IAB node.

Moreover, the controlling unit 150 can overwrite the configuration information 1 with the configuration information 2. While overwriting, when the configuration information 1 is retained in the resource information retaining unit 140 and the configuration information 2 is acquired (recognized), the configuration information 2 can be used on priority over the configuration information 1, and the configuration information 1 need not be deleted or made not available. In other words, the controlling unit 150 can prioritize the configuration information 2 over the configuration information 1.

### (2.2) CU 50

FIG. 4 is a functional block diagram of the CU 50. As shown in FIG. 4, the CU 50 includes a NW IF unit 51, an information transmitting unit 53, a resource information retaining unit 55, and a controlling unit 57.

The NW IF unit 51 provides a communication interface that realizes connection with the radio communication node 100A and the like. For example, the NW IF unit 51 can include interfaces such as N2 and N3.

The information transmitting unit 53 transmits information of the radio resource allocated to the parent node and the IAB node, based on an instruction from the controlling unit 57. Specifically, the information transmitting unit 53 transmits toward the radio communication node 100A the allocation information of the MT and DU resources that are allocated to the radio communication node 100A that constitutes the parent node.

Moreover, the information transmitting unit 53 transmits toward the radio communication node 100B the allocation information of the MT and DU resources that are allocated to the radio communication node 100B that constitutes the IAB node.

Furthermore, the information transmitting unit 53 can transmit to the parent node the radio resource information, specifically, the configuration information 1 and configuration information 2 for the child node in IAB node explained above.

The resource information retaining unit 55 retains the allocation information of the MT and the DU resources that is transmitted by the information transmitting unit 53. Specifically, the resource information retaining unit 55 retains the allocation information of the MT and the DU resources that are allocated to the parent node and the IAB node. The retained allocation information is appropriately updated.

The controlling unit 57 controls various functional blocks that constitute the CU 50. Particularly, in the present embodiment, the controlling unit 57 executes control relating to the radio resources that are allocated to the parent node and the IAB node.

Specifically, the controlling unit 57 controls the MT and the DU resources allocated to the parent node and the IAB node, and causes the information transmitting unit 53 to transmit the allocation information of the MT and the DU resources.

### (3) Operation of Radio Communication System

Operation of the radio communication system 10 is explained below. Specifically, an operation related to the allocation of the MT and the DU resources to the parent node and the IAB node, and the notification of the configuration information of the radio resource will be explained.

### (3.1) Example of allocation of MT and DU resources to parent node and IAB node

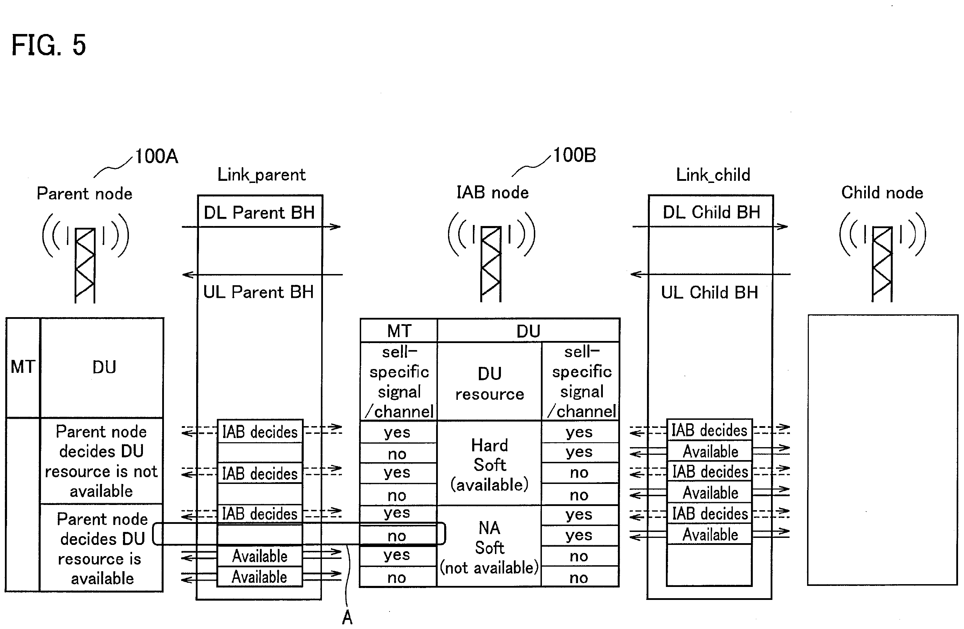

FIG. 5 shows an example of allocation of the MT and the DU resources to the parent node and the IAB node. In FIG. 5, the Link_parent is configured between the parent node (radio communication node 100A) and the IAB node (radio communication node 100B), and the Link_child (can be referred to as DU child link) is configured between the IAB node and the child node.

Specifically, the Link_parent is configured between the DU of the parent node and the MT of the IAB node. Moreover, the Link_child is configured between the DU of the IAB node and a not-shown MT of the child node.

As explained above, the DU resources are categorized into H / S / NA types, and the soft (S) is further configured to available or not available.

In FIG. 5, whether or not radio resources available as cell specific signals or channels are allocated to the MT and the DU of the IAB node is indicated with "yes" and "no".

Moreover, "IAB decides" indicates that selection of the Link_parent or the Link_child depends on the decision of the IAB node. "Available" indicates a radio resource that can be selected by the IAB node based on the notification of the DU resource from the parent node (controlling unit 150) and the allocation of a cell specific signal or channel.

As explained above, when determining the radio resource to be allocated only based on H / S / NA / D / U / F, even if the parent node allocates radio resources to the DU of the parent node, there is a possibility that the IAB node does not select a link with the parent node (Link_parent) (area A in the figure). The DU resource is eventually wasted because it is not used for any operation or procedure, and there is a room for improvement from the viewpoint of the utilization efficiency of the radio resources.

In the present embodiment, the DU resource allocation that can eliminate such a state is realized. In the 3GPP, the following content has been agreed upon.

- The core network (CU 50) configures H / S / NA for the DU resource of the IAB node
- The parent node instructs availability for the soft DU resource of the IAB node
- The DU resource of the IAB node is configured to hard / soft (available), but a cell specific signal or channel is allocated to the MT, the IAB node selects whether to use the DU or the MT
- The parent node includes a function that partly or completely comprehends the configurations (H / S / NA / D / U / F) of the DU resource of the IAB node
- The parent node need not directly recognize the cell specific signal / channel allocation information for the DU of the IAB node.
- The IAB node handles the radio resources used for a cell specific signal or channel configurations as hard (Hard DU resource)

### (3.2) Radio resource allocation operation

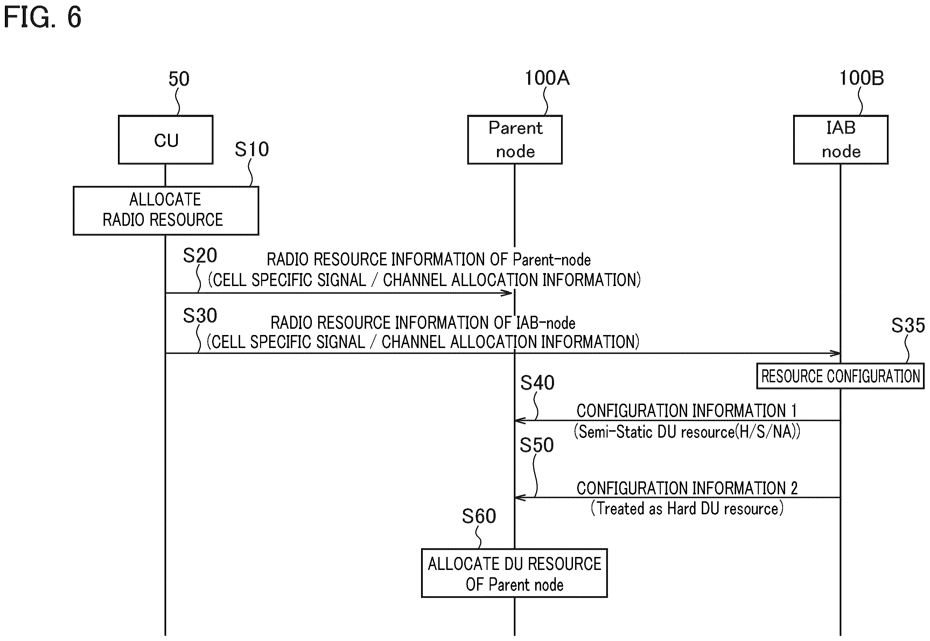

Next, an example of a DU resource allocation operation for the IAB node will be explained. FIG. 6 shows an operation sequence for allocating DU resources to the IAB node.

As shown in FIG. 6, the CU 50 allocates the radio resources to the parent node (radio communication node 100A, hereinafter the same) and the IAB node (radio communication node 100B, hereinafter the same) (Step S10). Specifically, the CU 50 allocates the MT and the DU resources of the parent node and the IAB node.

The CU 50 notifies the parent node of the information on the radio resource allocated to the parent node (includes cell specific signal / channel allocation information) (Step S20).

Moreover, the CU 50 notifies the IAB node of the information on the radio resource allocated to the IAB node (includes cell specific signal / channel allocation information) (Step S30).

Furthermore, the notification of the information on the radio resource can be realized via signaling as explained later or can be notified via signaling using a radio resource control layer (RRC) or a MAC control element (CE).

The IAB node performs configurations for the radio resource that is used by the IAB node based on the notified information of the radio resources. Specifically, the IAB node configures a communication path with the parent node and the child node by using the MT and DU resources (Step S35).

Moreover, the IAB node notifies the parent node of the configuration information 1, in other words, the DU resource information (H / S / NA) that is instructed semi-statically by the CU 50 to the IAB node (Step S40) . Furthermore, the IAB node notifies the parent node of the configuration information 2, in other words, the information on the radio resource (Hard DU resource) that is allocated to a cell specific signal or channel in the IAB node and handled as DU "hard" in the IAB node (Step S50) .

In the example shown in FIG. 6, the IAB node notifies the configuration information 1 and the configuration information 2 to the parent node. However, the CU 50 can recognize the state of the Hard DU resource of the IAB node, and can notify the parent node of the configuration information 1 and the configuration information 2. Moreover, the notification (signaling) method of the configuration information 1 and the configuration information 2 will be explained later.

The parent node allocates the DU resource to the parent node based on the DU configuration information of the IAB node that includes configuration information 1 and configuration information 2 notified by the IAB node (Step S60) .

### (3.3) Notification operation of the configuration information of the radio resources

Next, an operation example of radio resource configuration information notification (signaling) will be explained. FIG. 7 shows an example of the signaling of the configuration information 1.

As explained above, the configuration information 1 is the DU resource information (H / S / NA) that is instructed semi-statically by the CU 50 to the IAB node. As shown in FIG. 7, the configuration information 1 ("Semi-static DU resource indication" in the figure) is notified in the units of the radio frames. In the example shown in FIG. 7, the radio frame is used as a unit; however, as explained above, a sub frame or a slot can also be used.

In the example shown in FIG. 7, "indication #1" is indicated for Radio Frame #0. The "indication #1" is constituted by 10 elements that indicate the DU resource information (H / S / NA) instructed to the IAB node. These elements correspond to subframes in the radio frame, and are indicated as "NA, NA, NA, NA, H, H, H, S, NA, H" in the "indication #1". In other words, the DU resource type (H / S / NA) in the time domain corresponding to each subframe in the radio frame is shown.

In the example shown in FIG. 7, the contents of the "indication #1" (shown by a solid line) are repeatedly applied from Radio Frames #0 to #9.

Then, "indication #2" is indicated for Radio Frame #10. The "indication #2", too, is constituted in a similar manner to that of the "indication #1", that is, by 10 elements that indicate the DU resource information (H / S / NA) instructed to the IAB node. In the "indication #2", "NA, NA, H, H, H, H, H, S, NA, H" is indicated.

In the example shown in FIG. 7, the contents of the "indication #2" (shown by a dotted line) are repeatedly applied from Radio Frames #10 to #19. From subsequent radio frames onwards, application of the same information is repeated.

Furthermore, to support the notification of the configuration information 1 of the configuration as shown in FIG. 7, signaling of layer 1 (L1) can be used, and as a baseline, a signaling method or a slot format stipulated in the existing 3GPP Release 15 can also be used, or a new slot format or, if possible, MAC-CE and higher layer signaling can also be used.

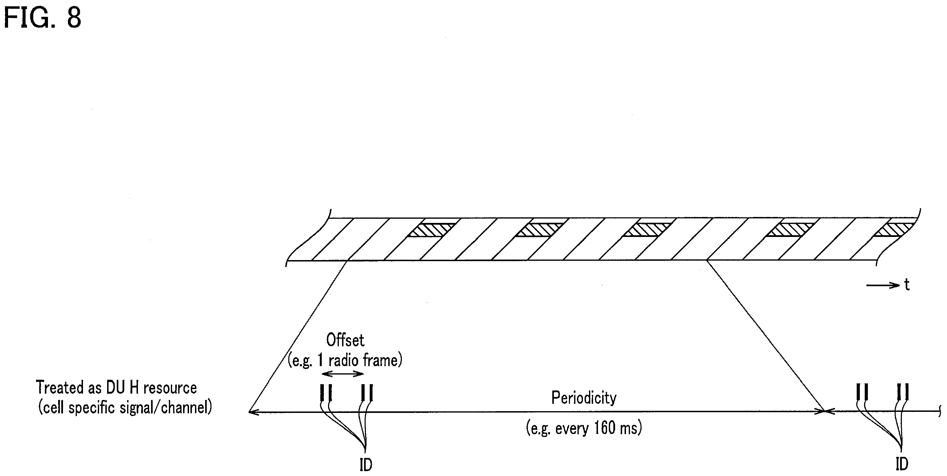

FIG. 8 shows example of the signaling of the configuration information 2. As explained above, the configuration information 2 is the information on the radio resource (Hard DU resource) that is allocated to a cell specific signal or channel in the IAB node and handled as "hard" DU in the IAB node.

As shown in FIG. 8, to correspond to the Hard DU resource handled in the IAB node as DU "hard" (for example, 160 milliseconds (ms) of RACH and the like) because the resource is allocated to a cell specific signal or channel in the IAB node, the configuration information 2 ("Treated as DU H resource" in the figure) can be associated to a transmission cycle of such signal or channel.

The "Treated as DU H resource", that is, the information on the Hard DU resource can be indicated at a specific resource location ("ID" in the figure) within the transmission cycle (Periodicity) of the signal or the channel.

As explained above, the Hard DU resource information can include a transmission cycle of the Hard DU resource (or a cell specific signal or channel) and an offset of the time direction from a location that indicates the Hard DU resource (for example, as shown in FIG. 8, 1 Radio Frame = 10 ms) ; however, such information is not necessarily mandatory. For example, the location that indicates the Hard DU resource can be stipulated in advance for each signal or channel, and an absolute location position that indicates the Hard DU resource within the transmission cycle can be transmitted via the signaling without using an offset.

Furthermore, for the configuration information 2, similar to the configuration information 1, Layer 1 (L1) signaling, signaling method stipulated in the existing 3GPP Release 15, or slot format, MAC-CE, and higher layer signaling can be used to support the notification of the configuration information 2.

### (4) Effects and Advantages

The following operational effects can be obtained with the embodiments explained above. Specifically, the parent node (radio communication node 100A) in the IAB acquires the radio resource configuration information for the child nodes in the IAB node (radio communication node 100B), specifically, the configuration information 1 (Semi-static DU resource) and the configuration information 2 (Treated as DU H resource).

The configuration information 1 is the DU resource information (H / S / NA) instructed semi-statically to the IAB node by the CU 50, and the configuration information 2 is information on radio resources (Hard DU resources) that are allocated to the cell specific signal / channel in the IAB node and handled in the IAB node as "hard" DU.

Accordingly, the parent node can acquire two types of configuration information relating to the IAB node. Therefore, the parent node need not directly recognize the cell specific signal or channel allocation information for the DU of the IAB node; however, even when the IAB node handles a radio resource used for configuring a cell-specific signal or channel for the own DU as the Hard DU resource, the configuration status of the radio resource in the IAB node can be recognized in detail.

Accordingly, the parent node can realize the allocation of the radio resource to the own node and the IAB node more appropriately after recognizing the configuration state of the radio resources in the IAB node when Integrated Access and Backhaul (IAB) is configured.

Furthermore, after the parent node considers the Hard DU resources of the IAB node, allocating the DU resource to the parent node becomes possible, and occurrence of a waste DU resource that is not used as shown in FIG. 5 can be reduced.

In the present embodiment, the configuration information 1 (Semi-static DU resource) includes information that indicates the type of the radio resource (H / S / NA) in units of radio frames, subframes, or slots. Accordingly, it is possible to reliably perform the signaling of the configuration information 1 while synchronizing with the operation and timing of the radio communication nodes that constitute the IAB.

In the present embodiment, the configuration information 2 (Treated as DU H resource) includes information that indicates the location of the radio resource (Hard DU resource) on the radio frame, the subframe, or the slot. Accordingly, the signaling of the configuration information 2 can be performed at an appropriate timing according to the transmission cycle of the cell specific signal / channel of the IAB node.

In the present embodiment, the configuration information 2 is handled with priority over the configuration information 1. Because the configuration information 2 (Treated as DU H resource) is the information on the Hard DU resources for which handling is changed in the IAB node because the resources are allocated to the cell specific signal / channel of the IAB node, the parent node can allocate radio resources based on the latest configuration state of the radio resource of the IAB node by giving priority to the configuration information 2.

### (5) Other Embodiments

Although the contents of the present invention have been described by way of the embodiments, it is obvious to those skilled in the art that the present invention is not limited to what is written here and that various modifications and improvements thereof are possible.

For example, in the embodiments explained above, the names of parent node, IAB node, and child node are used; however, as long as the configuration of the radio communication node in which the radio backhaul between the radio communication nodes such as gNB and radio access with a user terminal is integrated is adopted, the names can be different. For example, the nodes can simply be called a first node, a second node, and the like, or can be called an upper node, a lower node, a relay node, an intermediate node, and the like.

Moreover, the radio communication node can be simply called as a communication device or a communication node, or can be expressed as a radio base station.

Moreover, the block diagram used for explaining the embodiments (FIGS. 3 and 4) shows blocks of functional unit. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that causes transmitting may be called a transmitting unit or a transmitter. For any of the above, as explained above, the realization method is not particularly limited to any one method.

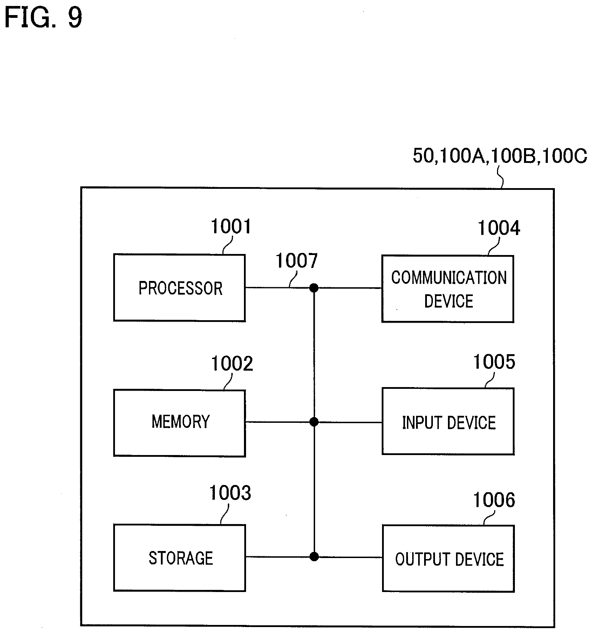

Furthermore, the CU 50 and the radio communication nodes 100A to 100C (reference device) explained above can function as a computer that performs the processing of the radio communication method of the present disclosure. FIG. 9 is a diagram showing an example of a hardware configuration of the reference device. As shown in FIG. 9, the reference device can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

The functional blocks of the reference device (see FIGS. 3 and 4) can be realized by any of hardware elements of the computer device or a desired combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and / or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads a computer program (program code), a software module, data, and the like from the storage 1003 and / or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main memory), and the like. The memory 1002 can store therein a computer program (computer program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and / or the storage 1003, a server, or other appropriate medium.

The communication device 1004 is hardware (transmission / reception device) capable of performing communication between computers via a wired and / or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information there among. The bus 1007 can be constituted by a single bus or can be constituted by separate buses between the devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware . For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), upper layer signaling (for example, RRC signaling, MediumAccess Control (MAC) signaling, notification information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer). It may be input and output via a plurality of network nodes.

The input / output information can be stored in a specific location (for example, a memory) or can be managed in a management table. The information to be input / output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of a channel and a symbol may be a signal (signaling) . Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and / or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows a communication between a base station and a mobile station to be replaced with a communication between a plurality of mobile stations (for example, may be referred to as Device-to-Device (D2D), Vehicle-to-Everything (V2X), or the like) . In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

A radio frame may be composed of one or more frames in the time domain. Each frame or frames in the time domain may be referred to as a subframe.
A subframe may be further configured by one or more slots in the time domain. The subframe may have a fixed time length (e.g., 1 ms) that does not depend on the numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. PDSCH (or PUSCH) transmitted in a time unit larger than a minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one between a subframe and TTI may be a subframe (1 ms) in existing LTE, or may be shorter than 1 ms (for example, 1 to 13 symbols), or a period longer than 1 ms. Note that, a unit representing TTI may be called a slot, a minislot, or the like instead of a subframe.

Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. Further, the number of slots (the number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, a common RB may be specified by RB index based on the common reference point of the carrier. PRB may be defined in BWP and numbered within that BWP.

BWP may include UL BWP (UL BWP) and DL BWP (DL BWP) . One or a plurality of BWPs may be configured in one carrier for the UE.

At least one of the configured BWPs may be active, and the UE may not expect to send and receive certain signals/channels outside the active BWP. Note that "cell", "carrier", and the like in this disclosure may be read as "BWP" .

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each apparatus may be replaced with "unit", "circuit", "device", and the like.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining" and "determining" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. In other words, "judgement" and "decision" may include considering some operation as "judged" and "decided". Moreover, "judgment (decision)" may be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### EXPLANATION OF REFERENCE NUMERALS

- 10: Radio communication system
- 50: CU
- 51: NW IF unit
- 53: Information transmitting unit
- 55: Resource information retaining unit
- 57: Controlling unit
- 100A, 100B, 100C: Radio communication node
- 110: Radio transmitting unit
- 120: Radio receiving unit
- 130: NW IF unit
- 140: Resource information retaining unit
- 150: Controlling unit
- 200: UE
- 1001: Processor
- 1002: Memory
- 1003: Storage
- 1004: Communication device
- 1005: Input device
- 1006: Output device
- 1007: Bus

## Claims

1. A radio communication node in which a first radio link is configured between the radio communication node and a first radio node, and a second radio link is configured between the first radio node and a second radio node, comprising:
a controlling unit that acquires configuration information of a radio resource for the second radio node in the first radio node, wherein
the configuration information includes
first configuration information that includes information on a radio resource transmitted by a network to the first radio node, and
second configuration information that includes information on a radio resource that is handled as a radio resource that is always available as a radio resource for the second radio node.

2. The radio communication node as claimed in claim 1, wherein the first configuration information includes information that indicates a type of a radio resource in units of a radio frame, a subframe, or a slot.

3. The radio communication node as claimed in claim 1 or 2, wherein the second configuration information includes information that indicates a location of a radio resource on a radio frame, a subframe, or a slot.

4. The radio communication node as claimed in any one of claims 1 to 3, wherein the second configuration information includes information on a radio resource that is handled as an always available radio resource because the resource is allocated to a cell specific signal or channel in the first radio node.

5. The radio communication node as claimed in any one of claims 1 to 4, wherein the controlling unit prioritizes the second configuration information over the first configuration information.

6. A radio communication method comprising:
configuring a first radio link between a radio communication node and a first radio node and a second radio link is configured between the first radio node and a second radio node, and
acquiring configuration information on a radio resource for the second radio node in the first radio node, wherein
the configuration information includes
first configuration information that includes information on a radio resource that is transmitted by a network to the first radio node, and
second configuration information that includes information on a radio resource that is handled as a radio resource that is always available as a radio resource for the second radio node.
